# EUROPÄISCHE PATENTSCHRIFT

(11) **EP 3 663 927 B1**
(45) Veröffentlichungstag und Bekanntmachung des Hinweises auf die Patenterteilung: **27.10.2021**
(21) Anmeldenummer: 19020671.4
(22) Anmeldetag: 03.12.2019
(51) Int. Cl.: G06F 12/06, G06F 12/14, G06F 1/3234, G06F 21/77, G06F 21/81

(54) **VERFAHREN ZUM ENERGIESPARENDEN BETREIBEN EINES SICHERHEITSELEMENTS EINER EIN-CHIP-SYSTEM-VORRICHTUNG, UND EIN-CHIP-SYSTEM-VORRICHTUNG**
METHOD FOR POWER-SAVING OPERATION OF A SECURITY ELEMENT OF A SINGLE-CHIP SYSTEM DEVICE, AND SINGLE-CHIP SYSTEM DEVICE
PROCÉDÉ DE FONCTIONNEMENT À ÉCONOMIE D'ÉNERGIE D'UN ÉLÉMENT DE SÉCURITÉ D'UN DISPOSITIF DE SYSTÈME SUR PUCE ET DISPOSITIF DE SYSTÈME SUR PUCE

(30) Priorität: 06.12.2018 DE 102018009604
(43) Veröffentlichungstag der Anmeldung: 10.06.2020
(73) Patentinhaber: Giesecke+Devrient Mobile Security GmbH, 81677 München (DE)
(72) Erfinder: Eckardt, Stefan, 82291 Mammendorf (DE)
(74) Vertreter: Giesecke + Devrient IP

(56) Entgegenhaltungen:
- KR-B1- 101 430 394
- US-A1- 2013 277 434
- US-A1- 2014 297 927
- US-A1- 2016 300 064
- US-B2- 8 200 885
- "Universal Mobile Telecommunications System (UMTS); LTE UICC power optimisation for Machine-Type Communication (3GPP TR 31.970 version 14.0.0 Release 14)", ETSI TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE , Bd. 3GPP CT, Nr. V14.0.0 6. Juni 2017 (2017-06-06), Seiten 1-16, XP014291040, Gefunden im Internet: URL:http://www.etsi.org/deliver/etsi_tr/13 1900_131999/131970/14.00.00_60/tr_131970v1 40000p.pdf [gefunden am 2017-06-06]

## Beschreibung

Die Erfindung betrifft ein Verfahren zum energiesparenden Betreiben eines Sicherheitselements einer Ein-Chip-System-Vorrichtung. Ein-Chip-System-Vorrichtungen sind bekannt. Unter einer Ein-Chip-System-Vorrichtungen (SoC - System-on-a-Chip oder System-on-Chip) versteht man die Integration aller oder eines großen Teils der Funktionen eines programmierbaren elektronischen Systems auf einem Chip (Die), also einem integrierten Schaltkreis (IC) auf einem Halbleiter-Substrat, auch monolithische Integration genannt. Bei der Nutzung von Silizium als Substratmaterial spricht man auch von System-on-Silicon (SoS). Als System wird dabei eine Kombination unterschiedlicher Elemente (logische Schaltungen, Taktgebung, selbständiges Anlaufen, mikrotechnische Sensoren usw.) aufgefasst, die zusammen eine bestimmte Funktionalität bereitstellen. Eingesetzt werden SoCs üblicherweise in eingebetteten Systemen.

Auch Sicherheitselemente sind bekannt. Ein Sicherheitselement kann beispielsweise als eUICC (embedded Universal Integrated Circuit Card) oder als eSIM (embedded Subscriber Identity Module) ausgebildet sein. Mit Hilfe dem eSIM wird ein mobiles Gerät, beispielsweise ein Mobiltelefon oder ein IoT-Gerät (IoT - Internet-of-Things), einem Netz zugeordnet und authentifiziert. Für diese Zwecke ist auf dem eSIM beispielsweise die IMSI (International Mobile Subscriber Identity) oder SUPI (Subscriber Permanent Identifier) gespeichert, welche bei Netzsuche und Einbuchung in ein Funknetz übertragen wird.

US 2014 297 927 A1 beschreibt eine Vorrichtung zur Verarbeitung von Informationen, die einen Hauptspeicher, der einen flüchtigen und einen nicht flüchtigen Speicherbereich aufweist, und eine Speicherseite aufweist, wobei die Speicherseite zu bestimmten Zeiten zwischen dem flüchtigen und nicht flüchtigen Speicher wechselt.

In der Technischen Spezifikation ETSI TS 102 221 - V14.0.0 (ETSI - European Telecommunications Standards Institute) ist ein Mechanismus zum energiesparenden Betrieben bzw. zum Ruhezustand (Suspend/Resume) von UICCs (Universal Integrated Circuit Cards) beschrieben. Dieser dient dazu den letzten Zustand (z.B. FilePointer, interne Variablen, beispielsweise von JavaCard Applets) der UICC zu sichern, um diese komplett stromlos zu schalten und nach dem Wiedereinschalten der Stromversorgung wieder den vorherigen Zustand wieder zurück zu erhalten.

Bisher wird für einen bevorstehenden Ruhezustand der letzte Zustand der UICC oder der eUICC in einen nicht-flüchtigen Speicher der UICC oder der eUICC geschrieben. Nachteilig ist hier die damit einhergehende Abnutzung bzw. Verkürzung der Lebensdauer des in der UICC oder eUICC enthaltenen nicht-flüchtigen Speichers.

Es ist Aufgabe der Erfindung ein Verfahren und eine Ein-Chip-System-Vorrichtung zu schaffen, mit welchem bzw. bei welchem eine Ein-Chip-System-Vorrichtung effizienter betrieben werden kann.

Die Aufgabe wird durch ein Verfahren und eine Ein-Chip-System-Vorrichtung gemäß den unabhängigen Ansprüchen gelöst.

Bei einem erfindungsgemäßen Verfahren wird ein Sicherheitselement einer Ein-Chip-System-Vorrichtung energiesparenden betrieben. Es werden folgende Schritte durchgeführt:
a) Empfangen eines Energiesparkommandos durch das Sicherheitselement, welches insbesondere von einem Prozessor der Ein-Chip-System-Vorrichtung abgesendet wird;
b) Übertragen zumindest einer aktuellen Programmkonfiguration des Sicherheitselements von einem flüchtigen Speicher des Sicherheitselements zu einem sicherheitselementexternen Speicher abhängig vom Energiesparkommando;
c) Anpassen, vorzugsweise Reduzieren, insbesondere Deaktivieren, einer Energieversorgung zumindest des flüchtigen Speichers des Sicherheitselements, insbesondere des kompletten Sicherheitselements; und
d) Energiesparendes Betreiben des Sicherheitselements nach der Übertragung.

Ein wichtiger Gedanke ist, dass die aktuelle Programmkonfiguration zu einem zum Sicherheitselement separat ausgebildeten und den sicherheitselementexternen Speicher umfassenden Modul der Ein-Chip-System-Vorrichtung übertragen wird.

Der Erfindung liegt die Erkenntnis zugrunde, dass die Programmkonfiguration bei einem Ein-Chip-System nicht wie für den Ruhezustandsmodus bisher üblich zu einem internen nicht-flüchtigen Speicher des Sicherheitselements übertragen wird, sondern zu einem, insbesondere flüchtigem, Speicher außerhalb des Sicherheitselements, welcher aber insbesondere in der Ein-Chip-System-Vorrichtung angeordnet ist. Die Energieversorgung des Sicherheitselements kann dann abgeschaltet werden. Dadurch wird die Ein-Chip-System-Vorrichtung effizienter betrieben, da unter anderem die Abnutzung von nicht-flüchtigem Speicher reduziert wird.

Soll das Sicherheitselement dann beispielsweise wieder aus dem Ruhezustand aufgeweckt bzw. reaktiviert werden, so wird die Energieversorgung des Sicherheitselements wieder angeschaltet bzw. aktiviert und die Programmkonfiguration wird vom sicherheitselementexternen Speicher zum flüchtigen Speicher des Sicherheitselements zurückübertragen.

Erfindungsgemäß ist es vorgesehen, dass die aktuelle Programmkonfiguration an ein Energie- und Kommunikationsmanagermodul der Ein-Chip-System-Vorrichtung übertragen wird. Das Energie- und Kommunikationsmanagermodul ist insbesondere dazu ausgebildet die Energieversorgung der einzelnen Module der Ein-Chip-System-Vorrichtung zu verwalten bzw. zu steuern. Durch den Kommunikationsmanager kann das Energie- und Kommunikationsmanagermodul auch die Kommunikation zwischen den einzelnen Modulen der Ein-Chip-System-Vorrichtung steuern und/oder die Kommunikation der Ein-Chip-System-Vorrichtung mit einer externen weiteren Vorrichtung steuern. Vorzugsweise umfasst die Ein-Chip-System-Vorrichtung auch ein Flashspeichermanagementmodul. Das Energie- und Kommunikationsmanagermodul ist insbesondere modemfrei ausgebildet, d.h. weist insbesondere kein Modem auf. Vorteilhaft ist die Nutzung des Energie- und Kommunikationsmanagermoduls, da hier insbesondere die (Haupt-)Energieverwaltung durchgeführt wird und das Energie- und Kommunikationsmanagermodul somit das letzte Modul der Ein-Chip-System-Vorrichtung ist, welches mit Energie versorgt wird.

Insbesondere weist das Energie- und Kommunikationsmanagermodul auch einen flüchtigen Speicher auf. Dieser flüchtige Speicher des Energie- und Kommunikationsmanagermoduls wird vorzugsweise genutzt, um die Programmkonfiguration während des Ruhezustands zwischenzuspeichern. Vorteilhaft ist die Nutzung des flüchtigen Speichers, da dieser weniger stark an Abnutzung durch die Schreibzyklen leidet wie ein nicht-flüchtiger Speicher. Weiterhin ist es vorzugsweise vorgesehen, dass die aktuelle Programmkonfiguration an einen flüchtigen sicherheitselementexternen Speicher des Moduls übertragen wird. Vorteilhaft ist die Nutzung des flüchtigen Speichers wiederum, da dieser durch die Nutzung nicht derart an Abnutzung durch die Schreibzyklen leidet, wie ein nicht-flüchtiger Speicher. Das Energie- und Kommunikationsmanagermodul wird vorzugsweise, während das Sicherheitselement oder zumindest der flüchtige Speicher des Sicherheitselements stromlos geschaltet ist, mit Energie versorgt, um auch den flüchtigen Speicher des Energie- und Kommunikationsmanagermoduls mit Energie versorgen zu können. Der flüchtige Speicher kann auch schneller beschrieben und ausgelesen werden als ein nicht-flüchtiger Speicher, wodurch der Ruhezustand schneller eingeleitet oder beendet werden kann.

Weiterhin ist es vorzugsweise vorgesehen, dass die aktuelle Programmkonfiguration vor der Übertragung, insbesondere durch das Sicherheitselement, verschlüsselt wird und die Programmkonfiguration verschlüsselt an das Modul übertragen wird. Dadurch kann die Programmkonfiguration des Sicherheitselements auch an einen unsicheren bzw. wenig sichereren Ort außerhalb des Sicherheitselements übertragen werden, ohne dass ein Sicherheitsrisiko entsteht. Insbesondere wird die verschlüsselte Programmkonfiguration nach der Zurückübertragung (bei Beendigung des Ruhezustands) im Sicherheitselement wieder entschlüsselt.

Weiterhin ist es vorzugsweise vorgesehen, dass das Sicherheitselement nach dem Anpassen, vorzugsweise Reduzieren, insbesondere Deaktivieren, der Stromversorgung ein Kommando empfängt und das empfangene Kommando überprüft wird, wobei das Sicherheitselement nur weiterbetrieben wird, falls das Kommando ein Fortsetzungskommando ist, welches eine Zurückübertragung der Programmkonfiguration vom sicherheitselementexternen Speicher zum flüchtigen Speicher des Sicherheitselements auslöst. Durch das Fortsetzungskommando können einzuhaltende Vorbedingungen für das Aktivieren des Ruhezustands reduziert werden, da zum Beispiel laufende Sitzungen durch den Ruhezustand unterbrochen werden können, da das Fortsetzungskommando nach Wiederanlegen der Spannung nun verpflichtend ist. Somit kann die alte Bearbeitung, also die Bearbeitung vor dem Ruhezustand, fortgesetzt werden. Bei dem bisher aus dem Stand der Technik bekannten Ruhezustand ist eine derartige Überprüfung und ein derartiges Fortsetzungskommando nicht vorgesehen, weswegen eine laufende Sitzung vollständig beendet werden soll, da nicht sicher ist, ob diese nach Beendigung des Ruhezustands wieder nahtlos fortgesetzt werden kann.

Weiterhin ist es vorzugsweise vorgesehen, dass das Sicherheitselement direkt mit der zurückübertragenen Programmkonfiguration gestartet wird. Direkt bedeutet in diesem Fall, dass keine generische Programmkonfiguration zuerst zum Starten genutzt wird, welche nach erfolgtem Starten mit der aus dem sicherheitselementexternen Speicher stammenden Programmkonfiguration verschnitten wird. Insbesondere nur die zurückübertragenen Programmkonfiguration wird also gleich zum starten des Sicherheitselement nach dem Ruhezustand genutzt. Dadurch kann das Sicherheitselement schneller und energieärmer starten.

Weiterhin ist es vorzugsweise vorgesehen, dass überprüft wird, ob das Sicherheitselement, insbesondere das Betriebssystem und/oder Applets des Sicherheitselements, Daten aufweisen, welche durch einen Angriff durch Wiedereinspielung bedroht sind, und welche insbesondere während zwei Ruhezustandszyklen angepasst wurden. Falls diese bedrohten Daten vorhanden sind, werden diese Daten vorzugsweise nicht zusammen mit der Programmkonfiguration in den (flüchtigen) Speicher übertragen, sondern vor einem erneuten Ruhezustand (Suspend) oder noch besser während des Ruhezustands in einen, insbesondere extern zum Sicherheitselement ausgebildeten, nicht-flüchtigen Speicher gespeichert. Vorteilhaft ist dies, da der nicht-flüchtige Speicher insbesondere keine geteilte Ressource ist, wie insbesondere beispielsweise der flüchtige Speicher. Nicht-geteilte Ressourcen sind schwerer anzugreifen und dadurch sicherer als geteilte Ressourcen.

Ergänzend ist es vorzugsweise vorgesehen, dass die Programmkonfiguration zusammen mit einem Zählerwert in den Speicher geschrieben wird, insbesondere durch das Betriebssystem des Sicherheitselements. Der Zählerwert wird insbesondere bei jeder neuen Übertragung bzw. Ruhezustandsvorbereitung angepasst, beispielsweise um 1 erhöht. Somit kann beim nächsten Wiederherstellen aus dem Ruhezustand (Resume) überprüft werden, ob die aktuelle Programmkonfiguration geladen wird. Dadurch kann ein Angriff durch Wiedereinspielung (Replay-Angriff) einer älteren Programmkonfiguration erkannt und verhindert werden.

Die Erfindung betrifft auch eine Ein-Chip-System-Vorrichtung mit einem Sicherheitselement und zumindest einem vom Sicherheitselement unterschiedlichen Modul. Das Sicherheitselement weist einen flüchtigen Speicher auf, welcher eingerichtet ist eine aktuelle Programmkonfiguration aufzunehmen. Das Sicherheitselement ist weiterhin dazu eingerichtet ein Energiesparkommando zu empfangen, und abhängig von dem empfangenen Energiesparkommando die Programmkonfiguration an einem sicherheitselementexternen Speicher zu übertragen. Als ein wichtiger Gedanke ist es vorgesehen, dass die Ein-Chip-System-Vorrichtung dazu eingerichtet ist, die aktuelle Programmkonfiguration zu einem Modul der Ein-Chip-System-Vorrichtung zu übertragen, welches zum Sicherheitselement separat ausgebildeten ist und den sicherheitselementexternen Speicher umfasst.

Vorzugsweise ist es vorgesehen, dass das Sicherheitselement als iUICC (integrated Universal Integrated Circuit Card) oder eSIM ausgebildet ist. Weiterhin ist es vorzugsweise vorgesehen, dass die aktuelle Programmkonfiguration als zumindest eine interne Variable eines Betriebssystems des Sicherheitselements und/oder eines Anwendungsprogramms des Sicherheitselements ausgebildet ist.

Weiterhin ist es vorzugsweise vorgesehen, dass die Ein-Chip-System-Vorrichtung als ein einziger physikalischer Chipbaustein ausgebildet ist. Dadurch weist die Ein-Chip-System-Vorrichtung vorzugsweise nur ein einziges Gehäuse auf und kann raumsparend verbaut werden.

Die mit Bezug auf das erfindungsgemäße Verfahren vorgestellten bevorzugten Ausführungsformen und deren Vorteile gelten entsprechend für die erfindungsgemäße Ein-Chip-System-Vorrichtung. Die gegenständlichen Komponenten der erfindungsgemäßen Ein-Chip-System-Vorrichtung sind jeweils dazu ausgebildet, die jeweiligen Schritte des Verfahrens auszuführen.

Weitere Merkmale der Erfindung ergeben sich aus den Ansprüchen, den Figuren und der Figurenbeschreibung.

Ausführungsbeispiele der Erfindung werden nachfolgend anhand schematischer Zeichnungen näher erläutert.

Dabei zeigen:
- Fig. 1: eine schematische Darstellung eines Ausführungsbeispiels einer erfindungsgemäßen Ein-Chip-System-Vorrichtung mit einem Sicherheitselement; und
- Fig. 2: eine schematische Darstellung eines Ablaufdiagramms zur Durchführung eines Ruhezustands des Sicherheitselements.

In den Figuren werden gleiche oder funktionsgleiche Elemente mit den gleichen Bezugszeichen versehen.

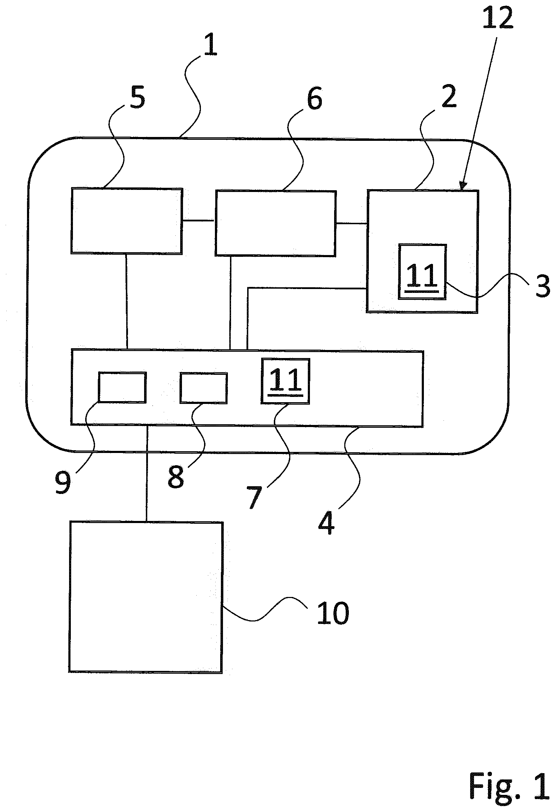

Fig. 1 zeigt eine Ein-Chip-System-Vorrichtung 1 mit einem Sicherheitselement 2. Das Sicherheitselement 2 wiederum weist einen flüchtigen Speicher 3 auf. Das Sicherheitselement 2 kann zusätzlich auch einen nicht dargestellten nicht-flüchtigen Speicher aufweisen.

Das Sicherheitselement 2 ist insbesondere als iUICC (integrated Universal Integrated Circuit Card) ausgebildet.

Weiterhin weist die Ein-Chip-System-Vorrichtung 1 ein Energie- und Kommunikationsmanagermodul 4, zumindest einen Anwendungsprozessor 5 und ein Modem 6 auf. Das Energie- und Kommunikationsmanagermodul 4 wiederum weist gemäß dem Ausführungsbeispiel einen flüchtigen Speicher 7, einen Flashcontroller 8 und einen nicht-flüchtigen Speicher 9 auf.

Das Energie- und Kommunikationsmanagermodul 4 ist gemäß dem Ausführungsbeispiel ein spezieller Bereich der Ein-Chip-System-Vorrichtung 1 für die Energieverwaltung der Ein-Chip-System-Vorrichtung 1. Das Energie- und Kommunikationsmanagermodul 4 ist insbesondere dazu ausgebildet, den flüchtigen Speicher 7 weiterhin mit Energie zu versorgen, während andere Bereiche der Ein-Chip-System-Vorrichtung 1, insbesondere das Sicherheitselement 2 und/oder das Modem 6, zum Energiesparen nahezu vollständig oder komplett abgeschaltet werden können.

Das Modem 6 ist vorzugsweise als Mobilfunkmodem, beispielsweise als LTE-Modem (LTE - Long Term Evolution) oder als 5G-Modem, ausgebildet.

Gemäß dem Ausführungsbeispiel ist die Ein-Chip-System-Vorrichtung 1 mit einem externen nicht-flüchtigen Speicher 10 verbunden. Der externe nicht-flüchtige Speicher 10 ist gemäß dem Ausführungsbeispiel außerhalb der Ein-Chip-System-Vorrichtung 1 angeordnet.

Das Sicherheitselement 2 wird mit einer Programmkonfiguration 11 betrieben. Die Programmkonfiguration 11 ist insbesondere zumindest als Teil eines Betriebssystems und/oder eines Anwendungsprogramms des Sicherheitselements 2 ausgebildet. Die Programmkonfiguration 11 kann als ein vollständiges Abbild des Betriebssystems und/ oder des Anwendungsprogramms oder aber auch lediglich als Speicherverweise und/oder interne Variablen des Betriebssystems und/oder des Anwendungsprogramms ausgebildet sein. Die Programmkonfiguration 11 ist gemäß dem Ausführungsbeispiel während des normalen Betriebs des Sicherheitselements 2 im flüchtigen Speicher 3 des Sicherheitselements 2 vorhanden.

Zur Vorbereitung eines Ruhezustands bzw. Standby-Zustands wird die Programmkonfiguration 11 dann gemäß dem Ausführungsbeispiel von dem flüchtigen Speicher 3 des Sicherheitselements 2 zu dem flüchtigen Speicher 7 des Energie- und Kommunikationsmanagermoduls 4 übertragen.

Nachdem die Programmkonfiguration 11 dann, insbesondere vollständig, an den flüchtigen Speicher 7 übertragen ist, wird die Energieversorgung des Sicherheitselements 2 reduziert oder vollständig deaktiviert. Das Sicherheitselements 2 befindet sich dann im Ruhezustand.

Die Programmkonfiguration 11 kann zur Vorbereitung des Ruhezustands beispielsweise auch zu einem Speicher des Modems 6, des Anwendungsprozessors 5 und/oder zu dem externen nicht-flüchtigen Speicher 10 übertragen werden.

Besonders vorteilhaft ist allerdings die Übertragung zum flüchtigen Speicher 7 des Energie- und Kommunikationsmanagermoduls 4. Zum einen werden bei der Nutzung des flüchtigen Speichers 7 (im Gegensatz zu einem nicht-flüchtigen Speichers) keine lebenszeitreduzierenden Schreibvorgänge durchgeführt. Zum anderen ist das Energie- und Kommunikationsmanagermodul 4 eben das Modul, welches für die Energieversorgung der übrigen Module zuständig ist, und kann somit die Energieversorgung oder Spannungsversorgung der übrigen Module, insbesondere des Sicherheitselements 2, des Anwendungsprozessors 5 und/oder des Modems 6, anpassen, insbesondere reduzieren oder deaktivieren. Somit kann das Energie- und Kommunikationsmanagermodul 4 die Steuerung derart vornehmen, dass die übrigen Module in den Energiesparmodus versetzt werden, für sich selbst aber noch eine ausreichende Energieversorgung bereitstellen, um den flüchtigen Speicher 7 mit Energie während des Ruhezustands zu versorgen.

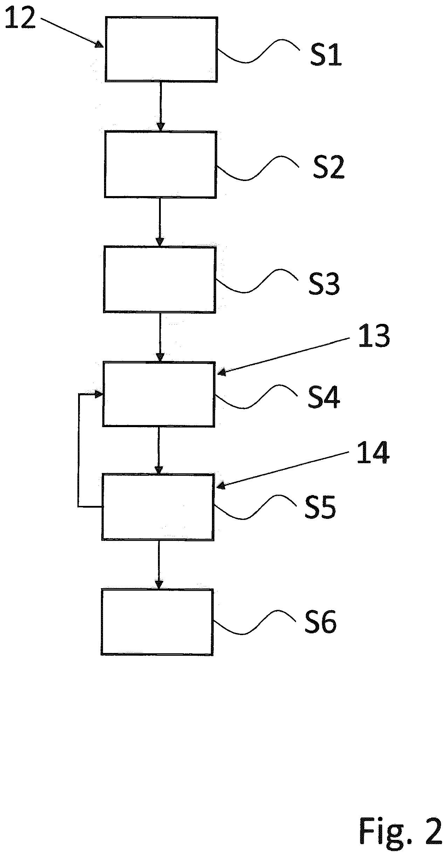

Fig. 2 zeigt ein Ablaufdiagramm zur Durchführung eines Ruhezustands des Sicherheitselements 2. In einem Schritt S1 wird ein Energiesparkommando 12 vom Sicherheitselement 2 empfangen. Das Energiesparkommando 12 kann beispielsweise als "SUSPENDXL" bezeichnet werden.

Das Energiesparkommando 12 wird vorzugsweise vom Energie- und Kommunikationsmanagermodul 4 ausgesendet, kann aber auch vom Sicherheitselement 2 selbst oder einem anderen Modul des Sicherheitselements 2 erzeugt werden.

In einem Schritt S2 wird abhängig vom bzw. ausgelöst durch das Energiesparkommando 12 die Programmkonfiguration 11 zum flüchtigen Speicher 7 des Energie- und Kommunikationsmanagermodul 4 übertragen.

In einem Schritt S3 wird die Energieversorgung des Sicherheitselements angepasst, insbesondere deaktiviert. Es wird dadurch Energie gespart.

In einem Schritt S4 empfängt das im Ruhezustand befindliche Sicherheitselement 2 ein Kommando 13.

In einem Schritt S5 wird das Kommando 13 überprüft, ob es sich um ein Fortsetzungskommando 14 handelt. Ist das Kommando 13 nicht als das Fortsetzungskommando 14 ausgebildet, so wird zum Schritt S4 zurückgesprungen.

Ist das Kommando 13 hingegen als das Fortsetzungskommando 14 ausgebildet, so wird abhängig von dem Fortsetzungskommando 14 in einem Schritt S6 die Programmkonfiguration 11 vom flüchtigen Speicher 11 des Energie- und Kommunikationsmanagermoduls 4 zum flüchtigen Speicher 3 des Sicherheitselements 2 (zurück-)übertragen. Das Sicherheitselement 2 wird wieder aktiviert bzw. aus dem Ruhezustand aufgeweckt.

## Patentansprüche

1. Verfahren zum energiesparenden Betreiben eines Sicherheitselements (2) einer Ein-Chip-System-Vorrichtung (1), bei welchem folgende Schritte durchgeführt werden:
a) Empfangen eines Energiesparkommandos (12) durch das Sicherheitselement (2);
b) Übertragen zumindest einer aktuellen Programmkonfiguration (11) des Sicherheitselements (2) von einem flüchtigen Speicher (3) des Sicherheitselements (2) zu einem sicherheitselementexternen Speicher abhängig vom Energiesparkommando (12);
c) Anpassen einer Energieversorgung zumindest des flüchtigen Speichers (3) des Sicherheitselements (2); und
d) Energiesparendes Betreiben des Sicherheitselements (2) nach der Übertragung,
**dadurch gekennzeichnet, dass**
die aktuelle Programmkonfiguration (11) zu einem zum Sicherheitselement (2) separat ausgebildeten und den sicherheitselementexternen Speicher (7) umfassenden Modul (4) der Ein-Chip-System-Vorrichtung (1) übertragen wird,
wobei das Sicherheitselement dazu ausgebildet ist, ein mobiles Gerät einem Netz zuzuordnen und zu authentifizieren,
wobei das den sicherheitselementexternen Speicher umfassende Modul ein Energie- und Kommunikationsmanagermodul ist.

2. Verfahren nach Anspruch 1, wobei die aktuelle Programmkonfiguration (11) an das Energie- und Kommunikationsmanagermodul (4) der Ein-Chip-System-Vorrichtung (1) übertragen wird.

3. Verfahren nach Anspruch 1 oder 2, wobei
die aktuelle Programmkonfiguration (11) an einen flüchtigen sicherheitselementexternen Speicher (7) des Moduls (4) übertragen wird.

4. Verfahren nach einem der vorhergehenden Ansprüche, wobei die aktuelle Programmkonfiguration (11) vor der Übertragung verschlüsselt wird und die Programmkonfiguration (11) verschlüsselt an das Modul übertragen wird.

5. Verfahren nach einem der vorhergehenden Ansprüche, wobei das Sicherheitselement (2) nach dem Anpassen der Stromversorgung ein Kommando empfängt und das empfangene Kommando überprüft wird, wobei das Sicherheitselement (2) nur weiterbetrieben wird, falls das Kommando ein Fortsetzungskommando ist, welches eine Zurückübertragung der Programmkonfiguration (11) vom sicherheitselementexternen Speicher (7) zum flüchtigen Speicher (3) des Sicherheitselements (2) auslöst.

6. Verfahren nach Anspruch 5, wobei
das Sicherheitselement (2) direkt mit der zurückübertragenen Programmkonfiguration (11) gestartet wird.

7. Ein-Chip-System-Vorrichtung (1) mit einem Sicherheitselement (2) und zumindest einem vom Sicherheitselement (2) unterschiedlichen Modul (4) wobei das Sicherheitselement (2) einen flüchtigen Speicher (3) aufweist, welcher eingerichtet ist eine aktuelle Programmkonfiguration (11) aufzunehmen, und wobei das Sicherheitselement (2) dazu eingerichtet ist ein Energiesparkommando (12) zu empfangen, und abhängig von dem empfangenen Energiesparkommando (12) die Programmkonfiguration (11) an einem sicherheitselementexternen Speicher (7) zu übertragen, **dadurch gekennzeichnet, dass**
die Ein-Chip-System-Vorrichtung (1) dazu eingerichtet ist, die aktuelle Programmkonfiguration (1) zu einem Modul (4) der Ein-Chip-System-Vorrichtung (1) zu übertragen, welches zum Sicherheitselement (2) separat ausgebildeten ist und den sicherheitselementexternen Speicher (7) umfasst, wobei das Sicherheitselement dazu ausgebildet ist, ein mobiles Gerät einem Netz zuzuordnen und zu authentifizieren,
wobei das den sicherheitselementexternen Speicher umfassende Modul ein Energie- und Kommunikationsmanagermodul ist.

8. Ein-Chip-System-Vorrichtung (1) nach Anspruch 7, wobei das Sicherheitselement (2) als eUICC oder eSIM ausgebildet ist.

9. Ein-Chip-System-Vorrichtung (1) nach Anspruch 7 oder 8, wobei die aktuelle Programmkonfiguration (11) als zumindest eine interne Variable eines Betriebssystems des Sicherheitselements (2) und/oder eines Anwendungsprogramms des Sicherheitselements (2) ausgebildet ist.

10. Ein-Chip-System-Vorrichtung (1) nach einem der Ansprüche 7 bis 9, wobei
die Ein-Chip-System-Vorrichtung (1) als ein einziger physikalischer Chipbaustein ausgebildet ist.

## Claims

1. A method for the energy-saving operation of a security element (2) of a system-on-a-chip device (1), in which the following steps are carried out:
a) receiving an energy-saving command (12) by the security element (2);
b) transferring at least one current program configuration (11) of the security element (2) from a volatile memory (3) of the security element (2) to a memory external to the security element depending on the energy-saving command (12);
c) adjusting an energy supply of at least the volatile memory (3) of the security element (2); and
d) energy-saving operation of the security element (2) after the transfer,
**characterized in that**
the current program configuration (11) is transferred to a module (4) of the system-on-a-chip device (1) which is configured separately from the security element (2) and comprises the memory (7) external to the security element,
wherein the security element is configured to associate and authenticate a mobile device to a network,
wherein the module comprising the memory external to the security element is an energy and communication manager module.

2. The method according to claim 1, wherein
the current program configuration (11) is transferred to the energy and communication manager module (4) of the system-on-a-chip device (1).

3. The method according to claim 1 or 2, wherein
the current program configuration (11) is transferred to a volatile memory (7), external to the security element, of the module (4).

4. The method according to any of the preceding claims, wherein
the current program configuration (11) is encrypted before transfer and the program configuration (11) is transferred to the module in encrypted form.

5. The method according to any of the preceding claims, wherein the security element (2), after the adjusting of the power supply, receives a command and the received command is checked, wherein the security element (2) is continued to be operated only if the command is a continuation command which triggers a re-transfer of the program configuration (11) from the memory (7) external to the security element to the volatile memory (3) of the security element (2).

6. The method according to claim 5, wherein
the security element (2) is started directly with the re-transferred program configuration (11).

7. A system-on-a-chip device (1) having a security element (2) and at least one module (4) which is different from the security element (2)
wherein the security element (2) has a volatile memory (3) which is devised to receive a current program configuration (11), and wherein the security element (2) is devised to receive an energy-saving command (12) and, depending on the received energy-saving command (12), to transfer the program configuration (11) to a memory (7) external to the security element,
**characterized in that**
the system-on-a-chip device (1) is devised to transfer the current program configuration (1) to a module (4) of the system-on-a-chip (1) which is configured separately from the security element (2) and comprises the memory (7) external to the security element, wherein the security element is configured to associate and authenticate a mobile device to a network, wherein the module comprising the memory external to the security element is an energy and communication manager module.

8. The system-on-a-chip device (1) according to claim 7, wherein the security element (2) is configured as an eUICC or an eSIM.

9. The system-on-a-chip device (1) according to claim 7 or 8, wherein
the current program configuration (11) is configured as at least one internal variable of an operating system of the security element (2) and/or of an application program of the security element (2).

10. The system-on-a-chip device (1) according to any of claims 7 to 9, wherein
the system-on-a-chip device (1) is configured as a single physical chip module.

## Revendications

1. Procédé pour faire fonctionner de manière économe en énergie un élément de sécurité (2) d'un dispositif de système sur puce (1), dans lequel les étapes suivantes sont effectuées :
a) réception, par l'élément de sécurité (2), d'un ordre d'économie d'énergie (12) ;
b) transfert d'au moins une configuration actuelle de programme (11) de l'élément de sécurité (2) depuis une mémoire volatile (3) de l'élément de sécurité (2) vers une mémoire externe à l'élément de sécurité en fonction de l'ordre d'économie d'énergie (12) ;
c) adaptation d'une alimentation en énergie d'au moins la mémoire volatile (3) de l'élément de sécurité (2) ; et
d) exécution du fonctionnement de manière économe en énergie de l'élément de sécurité (2) après le transfert,
**caractérisé en ce que**
la configuration actuelle de programme (11) est transférée à un module (4), du dispositif de système sur puce (1), réalisé séparément de l'élément de sécurité (2) et comprenant la mémoire (7) externe à l'élément de sécurité,
cependant que l'élément de sécurité est configuré pour affecter à un réseau un appareil mobile et pour l'authentifier,
cependant que le module comprenant la mémoire externe à l'élément de sécurité est un module gestionnaire d'énergie et de communication.

2. Procédé selon la revendication 1, cependant que la configuration actuelle de programme (11) est transférée au module gestionnaire d'énergie et de communication (4) du dispositif de système sur puce (1).

3. Procédé selon la revendication 1 ou 2, cependant que la configuration actuelle de programme (11) est transférée à une mémoire volatile (7), externe à l'élément de sécurité, du module (4).

4. Procédé selon une des revendications précédentes, cependant que la configuration actuelle de programme (11) est cryptée avant le transfert, et la configuration de programme (11) est transférée au module sous forme cryptée.

5. Procédé selon une des revendications précédentes, cependant que l'élément de sécurité (2) reçoit après l'adaptation de l'alimentation en courant un ordre et que l'ordre reçu est vérifié, cependant que le fonctionnement de l'élément de sécurité (2) n'est poursuivi que si l'ordre est un ordre de poursuite qui déclenche un retransfert de la configuration de programme (11) de la mémoire (7), externe à l'élément de sécurité, à la mémoire volatile (3) de l'élément de sécurité (2).

6. Procédé selon la revendication 5, cependant que
l'élément de sécurité (2) est démarré directement avec la configuration de programme (11) retransférée.

7. Dispositif de système sur puce (1) comportant un élément de sécurité (2) et au moins un module (4) différent de l'élément de sécurité (2), cependant que l'élément de sécurité (2) comporte une mémoire volatile (3) conçue pour réceptionner une configuration actuelle de programme (11), et cependant que l'élément de sécurité (2) est conçu pour recevoir un ordre d'économie d'énergie (12) et, en fonction de l'ordre d'économie d'énergie (12) reçu, transférer la configuration de programme (11) à une mémoire (7) externe à l'élément de sécurité,
**caractérisé en ce que**
le dispositif de système sur puce (1) est conçu pour transférer la configuration actuelle de programme (1) à un module (4) du dispositif de système sur puce (1) qui est configuré séparément de l'élément de sécurité (2) et comprend la mémoire (7) externe à l'élément de sécurité, cependant que l'élément de sécurité est réalisé pour affecter à un réseau un appareil mobile et pour l'authentifier,
cependant que le module comprenant la mémoire externe à l'élément de sécurité est un module gestionnaire d'énergie et de communication.

8. Dispositif de système sur puce (1) selon la revendication 7, cependant que l'élément de sécurité (2) est réalisé sous forme de eUICC ou de eSIM.

9. Dispositif de système sur puce (1) selon la revendication 7 ou 8, cependant que la configuration actuelle de programme (11) est réalisée sous forme d'au moins une variable interne d'un système d'exploitation de l'élément de sécurité (2) et/ou d'un programme d'application de l'élément de sécurité (2).

10. Dispositif de système sur puce (1) selon une des revendications de 7 à 9, cependant que le dispositif de système sur puce (1) est réalisée en tant qu'un seul composant physique puce.
